# EUROPEAN PATENT APPLICATION

(11) **EP 2 453 001 A1**
(43) Date of publication of application: **16.05.2012**
(21) Application number: 10797208.5
(22) Date of filing: 09.07.2010
(51) Int. Cl.: C11C 3/10, C11C 3/00

(54) **RAW OIL OR FAT FOR PRODUCTION OF HIGHER FATTY ACID ALKYL ESTER, AND PROCESS FOR PRODUCTION OF HIGHER FATTY ACID ALKYL ESTER**

(30) Priority: 10.07.2009 JP 2009163535
(71) Applicant: Yamaguchi University, Yamaguchi 753-8511 (JP)
(72) Inventor: FUKUNAGA, Kimitoshi, Ube-shi Yamaguchi 755-8611 (JP); YABUUCHI, Yurie, Ube-shi Yamaguchi 755-8611 (JP)
(74) Representative: Grünecker, Kinkeldey, Stockmair & Schwanhäusser
(86) International application number: PCT/JP2010/061723
(87) International publication number: WO 2011/004897

(57) **Abstract**

Provided is a process for obtaining higher fatty acid alkyl esters by subjecting glycerides of fats and oils to transesterification with a monovalent lower aliphatic alcohol, in order to obtain a substitute diesel fuel that can serve as a fuel for diesel engines and the like, and particularly, this process is intended to effectively remove free fatty acids contained in fats and oils. Before raw material fats and oils are supplied to a transesterification reaction, the raw material fats and oils are first treated with a monovalent lower aliphatic alcohol using an alkali metal hydrogen sulfate as a catalyst, free fatty acids are esterified, and then, the resultant is supplied to the transesterification reaction.

## Description

### TECHNICAL FIELD

The present invention relates to a process for producing a lower alkyl ester of a higher fatty acid from fats and oils containing free form fatty acids, and a monovalent lower alcohol. More particularly, the present invention relates to a process for producing a higher fatty acid alkyl ester which serves as an alternative diesel fuel that can be utilized in diesel engines and the like, from waste edible oil or non-edible fats and oils.

### BACKGROUND ART

In view of the concerns about the depletion of petroleum resources, or the deterioration of the environment due to carbon dioxide emission, various fuels as substitutes for petroleum have been taken into consideration, and among them, attention is being paid to animal and vegetable fats and oils, and particularly fuels obtainable through vegetables. That is, since vegetables grow by fixing carbon dioxide in air through the carbon dioxide assimilation during the growth, even if vegetable fats and oils are combusted, the combustion does not lead to an increase in carbon dioxide in the atmosphere.

For this reason, extensive research has already been conducted on so-called biofuels which use biomasses as raw materials.

Among these, mainly, methods for producing alcohols by a fermentation method using corns and soybeans, and methods of using fats and oils (triglycerides) themselves have been suggested. However, because the former methods use corns and soybeans, which are foodstuffs, as raw materials, the methods have a problem of causing steep rises in prices. The latter methods cause inconvenience such as, for example, clogging of filters or sticking of pistons in diesel engines and the like.

Thus, there has been proposed a method of converting fats and oils, which is glycerin esters of higher fatty acids (triglycerides), to fuel with so-called alcoholysis, by which lower alcohol esters of higher fatty acids are obtained by transesterification of glycerin in the triglycerides with monovalent lower aliphatic alcohols.

Alcoholysis is a method of generally adding 10% to 20% (by weight) of a monovalent lower alcohol, for example, methanol or ethanol, to fats and oils, heating the mixture to 30°C to the boiling point of the monovalent lower alcohol used, using a basic catalyst, for example, a strong alkali such as sodium hydroxide, potassium hydroxide or calcium oxide, carrying out a transesterification reaction to obtain alcohol esters of higher fatty acids, and then separating and collecting these esters from glycerin that are produced as side products, water, unreacted alcohol and catalyst residues.

When such a method is used, even fats and oils such as fats and oils containing some impurities, for example, waste edible oil, and Jatropha oil, which is unsuitable for edible, can also be utilized.

However, one problem of the production of fuel by alcoholysis of fats and oils is that fats and oils contain free form fatty acids (also called free fatty acids) to a greater or lesser extent. Particularly, fats and oils which have undergone degradation, such as waste edible oil, contain a relatively large amount of free fatty acids.

When such fats and oils are supplied to a transesterification reaction using a basic catalyst such as described above, alkali metal salts of free fatty acids (so-called soaps) are produced as side products. Therefore, not only a loss of catalyst occurs, but also it is difficult to separate the higher fatty acid alkyl esters thus obtained, from glycerin and water that are produced as side products, due to emulsification of the soaps.

Accordingly, in regard to raw material fats and oils, there is a tendency that, for example, fats and oils exhibiting high acid values such as a value of greater than 3 KOH-mg/g, are avoided as a raw material.

Thus, it has been proposed to eliminate free fatty acids or moisture in fats and oils by a pretreatment.

For example, there have been proposed a method of bringing raw material fats and oils into contact with a waste liquid that is produced as a side product when fats and oils are caused to react with methanol in the presence of an alkali catalyst (this waste liquid is mainly glycerin containing an alkali catalyst), saponifying free fatty acids with the alkali that is present in the waste liquid, neutralizing the fats and oils, subsequently separating the fats and oils and the soaps produced by saponification from the waste liquid, and supplying the fats and oils to alcoholysis, which is the main reaction that follows (Patent Literature 1); a method of supplying raw material fats and oils and methanol (or ethanol) together to a cation-exchange resin, esterifying free fatty acids, and then supplying the esterification product to alcoholysis as the main reaction, in which an anion-exchange resin is used as a catalyst (Patent Literature 2); a method of similarly performing a pretreatment step, using an amorphous carbon having a sulfonic acid group introduced therein as a cation-exchange body (Patent Literature 3); a method of methyl-esterifying free fatty acids using sulfuric acid and methanol in a pretreatment (Non-Patent Literature 1), and the like.

Among these methods, in the pretreatment using glycerin waste liquid that is produced as a side product, it is difficult to separate the waste liquid after treatment because of the soaps that are produced as side products, and since most of the free fatty acids are removed as soaps, a loss of raw materials occurs. Furthermore, the methods of using ion-exchange resins do not have a problem of separation or a problem of soap production; however, the reaction ratio is low; it is difficult to obtain sufficient effects, and regeneration of the resins is not easy. In addition, the esterification of free fatty acids with sulfuric acid is such that although certain effects can be expected, since sulfuric acid is a powerful drug having a strong oxidizing power, handling thereof is hazardous, and due to the problem of corrosion of the apparatus, the use of highly expensive materials is unavoidable.

Thus, there is a demand for the development of a truly effective and inexpensive method for the production of biofuels by alcoholysis of fats and oils.

### CITATION LIST

### Patent Literature

Patent Literature 1: Japanese Patent Application Laid-Open (JP-A) No. 2008-024841
Patent Literature 2: JP-A No. 2006-104316
Patent Literature 3: WO 2007-00913 Non-Patent Literature

Non-Patent Literature 1: Transactions of the ASAE, Vol. 44 (6) ; 1429-1436

### DISCLOSURE OF INVENTION

### PROBLEM TO BE SOLVED BY THE INVENTION

An object of the present invention is to provide a technology for the production of a higher fatty acid lower alkyl ester which can be used as a biofuel, through a transesterification reaction using fats and oils as raw materials, and more particularly, a technology of producing a monovalent lower alkyl ester of higher fatty acids efficiently at low cost, by solving the inconvenience due to the free fatty acids contained in fats and oils.

### MEANS FOR SOLVING PROBLEM

According to a first aspect of the present invention in order to achieve the object described above, there are provided raw material fats and oils for the production of higher fatty acid alkyl esters, which are subjected to a transesterification reaction with a monovalent lower aliphatic alcohol in the presence of a basic catalyst during the production of higher fatty acid alkyl esters, and which have been pretreated with a monovalent aliphatic alcohol using an alkali metal hydrogen sulfate as a catalyst.

According to the first aspect, the raw material fats and oils are preferably raw material fats and oils for the production of higher fatty acid alkyl esters, obtained by subjecting waste edible oil or non-edible fats and oils to the pretreatment described above. Furthermore, according to the first aspect, the pretreated raw material fats and oils for the production of higher fatty acid alkyl esters preferably have an acid value of 2.5 KOH-mg/g or less, more preferably 1.0 KOH-mg/g or less, and particularly preferably 0.5 KOH-mg/g or less.

According to the first aspect, the alkali metal hydrogen sulfate is preferably sodium hydrogen sulfate, and the basic catalyst is preferably sodium hydroxide or calcium oxide.

According to a second aspect of the present invention, there is provided a process for producing higher fatty acid alkyl esters, by which higher fatty acid alkyl esters are produced by subjecting the pretreated raw material fats and oils for the production of higher fatty acid alkyl esters, and a monovalent lower aliphatic alcohol to a transesterification reaction in the presence of a basic catalyst.

According to a third aspect of the present invention, there is provided a process for producing higher fatty acid alkyl esters, the process including: supplying raw material fats and oils, a monovalent aliphatic alcohol, and an alkali metal hydrogen sulfate as a catalyst to a pretreatment tank, and carrying out a pretreatment; separating a catalyst residue from a treated liquid discharged from the pretreatment tank; supplying the treated liquid, from which the catalyst residue has been separated, to a main reaction tank, adding a monovalent lower aliphatic alcohol and a basic catalyst to the main reaction tank, and thereby carrying out a transesterification reaction; and separating and collecting higher fatty acid alkyl esters from the reaction liquid discharged from the main reaction tank.

According to a fourth aspect of the present invention, there is provided a process for producing higher fatty acid alkyl esters, the process including allowing a monovalent aliphatic alcohol and free form fatty acids to react by using an alkali metal hydrogen sulfate as a catalyst.

### EFFECT OF THE INVENTION

Fats and oils are glycerin esters of higher fatty acids (glycerides), and generally contain free fatty acids to a greater or lesser extent as impurities. Particularly, in waste edible oil and the like, degradation occurs as a result of heating or the like, and waste edible oil and the like contain relatively large amounts of free fatty acids. Thus, in order to produce alkyl esters of higher fatty acids by eliminating glycerin through a transesterification reaction or the like, it is advantageous, in view of production, to remove free fatty acids that are impurities.

Techniques for removing these impurities through a pretreatment have already been proposed, but it cannot be said that all of them are satisfactory.

According to the present invention, an inexpensive and safe alkali metal hydrogen sulfate, preferably sodium hydrogen sulfate, is used as a catalyst, free fatty acids as impurities can be esterified using an aliphatic alcohol and incorporated into a portion of the manufactured product, and unreacted alcohol can be collected and directly supplied to a transesterification reaction, which is the main reaction. Furthermore, there is an advantage that since the catalyst is a solid, the catalyst can be easily separated by filtration or decantation.

### BRIEF DESCRIPTION OF DRAWINGS

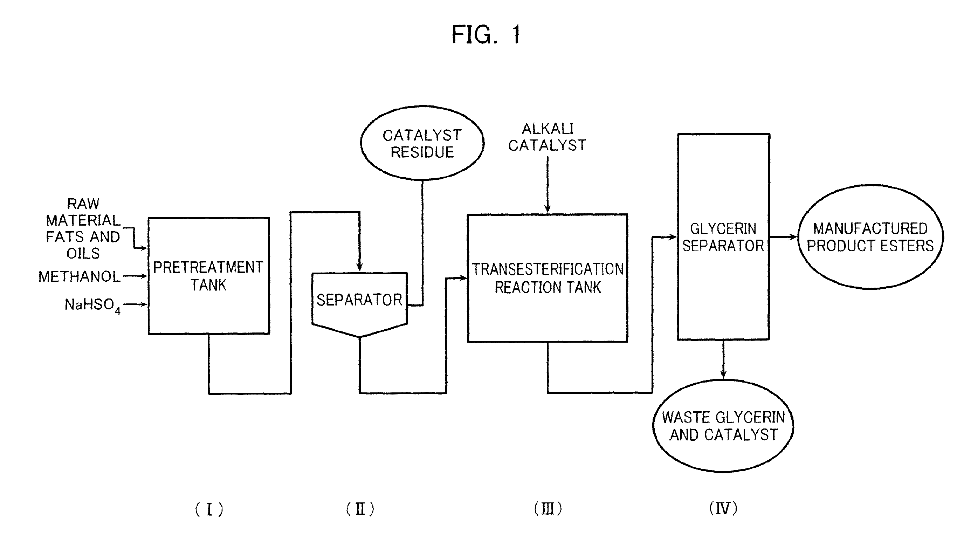

FIG. 1 is a block diagram illustrating an example of the process flow for carrying out the present invention.

### BEST MODES FOR CARRYING OUT THE INVENTION

The most advantageous feature of the present invention is that in the case of producing higher fatty acid alkyl esters by a transesterification reaction of glycerides as the main reaction, a pretreatment for removing free fatty acids that are contained in the raw material fats and oils as impurity is carried out, and particularly during the treatment, an alkali metal hydrogen sulfate is used as a catalyst.

The esterification reaction of glycerides, which is the main reaction according to the present invention, can utilize conventionally known techniques without any limitations. Generally, a transesterification reaction can be carried out by using a basic catalyst, for example, an inorganic strong base such as sodium hydroxide, calcium hydroxide, calcium oxide or calcium hydroxide, or an organic base such as sodium methoxide or a strongly basic anion-exchange resin, as a catalyst, and bringing triglycerides into contact with a monovalent lower aliphatic alcohol such as methanol, ethanol, n-propanol, isopropanol, butanol or tertiary butanol, preferably methanol or ethanol, at a temperature of 30°C to the boiling point of the monovalent lower aliphatic alcohol or lower.

The reaction is generally carried out in a batch system using a stirring tank, but since a transesterification reaction based on a basic catalyst proceeds relatively easily, a continuous reaction may also be carried out in a flow system, such as a fixed bed system in which triglycerides and a monovalent lower aliphatic alcohol are passed through a catalyst bed in a countercurrent manner or in a concurrent manner, or a fluidized bed system in which a solid catalyst is fluidized.

Furthermore, after completion of the main reaction, unreacted alcohol is separated from the reaction liquid discharged from the reactor, by distillation under reduced pressure or the like, the higher fatty acid alkyl esters, being the manufactured product, are separated from glycerin, water and catalyst residue, which are in a phase-separated state, through decantation, centrifugation or the like, and thus the manufactured product is collected. The manufactured product can be subjected to drying, purification and the like, as necessary.

According to the present invention, it is intended to reduce free fatty acids (free form fatty acids) contained in the raw material fats and oils, prior to the main reaction. Generally, fats and oils contain free fatty acids to a greater or lesser extent, and therefore, fats and oils may exhibit an acid value of 8 KOH-mg/g or greater at times. Particularly, degraded fats or oils such as waste edible oil, or non-edible fats and oils often have an acid value of greater than 10 KOH-mg/g. Examples of free fatty acids include palmitic acid, stearic acid, oleic acid, linolic acid, and linolenic acid. Non-edible fats and oils are fats and oils that are unsuitable for a use as food, and examples thereof include tung oil, cotton seed oil, castor oil, curcas oil (Jatropha oil, physic nut oil), sea mango oil, sandbox tree oil, and non-edible lard.

In general, if the acid value exceeds 3 KOH-mg/g, it is said that not only a loss of the catalyst occurs, but also the separation of glycerin is made difficult due to the generation of soaps.

Thus, according to the present invention, it is intended to pretreat raw material fats and oils with a monovalent aliphatic alcohol in the presence of an alkali metal hydrogen sulfate salt catalyst, to remove free fatty acids by esterification, and to remove free fatty acids substantially completely, such as to obtain an acid value of 2.5 KOH-mg/g or less, and preferably 0.5 KOH-mg/g or less. In regard to the raw material fats and oils, any fats and oils containing free fatty acids may be used, and higher fatty acid alkyl esters can be obtained by esterifying these free fatty acids. When the proportion of the free fatty acids in the raw material fats and oils is high, higher fatty acid alkyl esters can be obtained with high purity, even without carrying out the main reaction.

The acid value according to the present invention is a value expressed as the amount (mg) of potassium hydroxide required to neutralize the acid component present in 1 g of raw material oil, and this acidic substance is substantially free fatty acids.

Examples of the alkali metal hydrogen sulfate used in the pretreatment of the present invention include lithium salt, sodium salt, potassium salt and the like, but particularly, sodium salt is general, and in the following, the present invention will be explained by taking sodium hydrogen sulfate as a representative example. Furthermore, these salts may also contain water of crystallization. Further, according to the present invention, an alkali metal hydrogen sulfate is a substance that is used in distinction from the basic catalyst that is used in the transesterification reaction, which is the main reaction.

The amount of catalysts used in the pretreatment of the present invention is appropriately selected on the basis of the acid value of the raw material fats and oils. Generally, the catalyst may be used in an amount of 0.1 moles or more, and preferably about 0.5 to 2 moles, relative to one mole of free fatty acids. However, fats and oils are generally fatty acid glycerides of sugars, and there are many kinds of fatty acids constituting the acid value. Thus, as a reference of the amount of use of the catalyst, the amount of catalysts used is about 1/1000 to 1/50 of the product of the weight of raw material fats and oils and the acid value, but the amount is not intended to be limited thereto. Meanwhile, when the amount of use of the catalyst is increased, the catalyst also causes decomposition and reactions of esters in the reaction system, which is not preferable. A preferred amount of use of the catalyst is about 1/500 to 1/100 based on the product of the weight of the raw material fats and oils and the acid value.

Furthermore, there are no particular limitations on the reaction time; however, since the reaction time may vary depending on the difference between the acid value of the raw material fats and oils and the final acid value previously determined as the target, the amount of catalysts, and the set temperature at the time of reaction, the reaction time may be determined by carrying out the reaction in advance prior to the actual reaction. In general, in the case of a raw material oil having an acid value of 10 KOH-mg/g, in order to lower the acid value down to 2.5 KOH-mg/g, the reaction time is about 15 minutes to 3 hours at 30°C to 90°C in the range of the amount of use of the catalyst.

Examples of the monovalent aliphatic alcohol used in the pretreatment of the present invention include methanol, ethanol, propanol, butanol and the like, but generally, it is preferable to use a monovalent lower aliphatic alcohol that is used in the main reaction. In this case, since the product esterified by the pretreatment is the same type as the product obtainable by the subsequent main reaction, even if a relatively large amount of alcohol is used at the time of the pretreatment and unreacted alcohol remains, the unreacted alcohol can be supplied to the subsequent main reaction. In some cases, it is also possible to supply all of the monovalent lower aliphatic alcohol required in the main reaction at the time of the pretreatment. In this way, only the basic catalyst may be supplied at the time of the main reaction.

There are no particular limitations on the reaction for the pretreatment of the present invention. In general, the reaction is carried out by dispersing a catalyst in a particulate form into a liquid mixture of fats and oils as raw materials and an alcohol. For this reason, a reaction tank equipped with a stirrer and a jacket for heating is used; however, since the catalyst is a solid, a continuous reaction system based on a flow system such as a fixed bed using a catalyst in a grain aggregate form or a fluidized bed using a granular catalyst can also be employed.

When the treated liquid after the pretreatment, or the higher fatty acid alkyl ester obtained by the main reaction is treated with an inorganic salt having chelating capacity or alkali capacity, such as sodium silicate, the metal content in the treated liquid or the higher fatty acid alkyl ester can be reduced, and the acid value can be reduced. The amount of use of the sodium silicate or the like is not particularly limited, but the amount of use is preferably an amount of about 0.1% to 10% (by weight) relative to the weight of the treated liquid or the higher fatty acid alkyl ester obtained.

Next, an example of the present invention will be described with reference to FIG. 1.

Fats and oils that serve as a raw material, for example, waste edible oil, a monovalent aliphatic alcohol, for example, methanol, and sodium hydrogen sulfate as a catalyst is sequentially supplied into a pretreatment tank. The pretreatment tank is provided with an appropriate heating apparatus and a stirrer, and a pretreatment step is carried out by heating the tank to about 30°C to 90°C. Usually in about one hour, when the acid value of the raw material fats and oils has decreased to 2.5 KOH-mg/g or less, and preferably 1 KOH-mg/g or less, heating or stirring is stopped, and the treated liquid is discharged. From this discharged liquid, a catalyst residue is separated at the subsequent separation step. Generally, the catalyst is separated by filtration, but the catalyst can also be separated at a higher rate using a centrifuge. Furthermore, the catalyst can be precipitated by leaving the system to stand still, and pretreated fats and oils can be collected as a supernatant. The fats and oils from which the catalyst has been removed by such a separation step can be first stored in a storage tank, but is supplied to a main reaction tank in order to be supplied to the transesterification reaction. In the main reaction tank, an amount of the monovalent lower aliphatic alcohol needed for the transesterification of glycerides in the raw material fats and oils is desirably an amount equivalent to 3 times the glycerides; however, if the monovalent lower aliphatic alcohol is added in too much excess, such an excess amount result only in an increase in the amount of unreacted alcohol to be collected. Therefore, an amount of about 10% to 20% (by weight) of the raw material fats and oils is used. This alcohol can also be added during the pretreatment step.

In the main reaction step, a basic catalyst is further added. As the basic catalyst, sodium hydroxide, potassium hydroxide, calcium oxide or the like is generally used; however, an organic basic compound or the like can also be definitely used.

In such a main reaction step, the conventionally well known conditions for a transesterification reaction can be employed without any limitation. Generally, the transesterification reaction can be carried out in a state in which the basic catalyst is suspended, at a temperature of 30°C to the boiling point of the monovalent aliphatic alcohol, and preferably at about 40°C to 90°C.

After completion of the reaction, the discharge liquid discharged from the main reaction tank is, if necessary, treated such that any unreacted monovalent aliphatic alcohol is collected by distillation. Of course, if the amount of use of the monovalent aliphatic alcohol is reduced, or in the case of an alcohol having a relatively high boiling point, for example, propanol or butanol, since the system can be used as a fuel while in a state in which the alcohol has been dissolved in the higher fatty acid alkyl ester, the step of collecting the alcohol may not be performed.

Generally, the reaction liquid discharged from the main reaction tank is processed such that after the alcohol is collected, the ester as a manufactured product are separated from glycerin as a side product and the catalyst residue, and the manufactured product is collected. Since glycerin and the catalyst residue occur in the lower phase, and the upper phase constitutes an ester phase as a result of the standing, the collection step is easily carried out by extracting the glycerin phase of the lower phase.

The higher fatty acid alkyl ester thus obtained is used directly as a fuel as a manufactured product, or if necessary, is subjected to a purification step such as dehydration, and then is used as a manufactured product.

Hereinafter, Examples will be described.

### Example 1

### [As to amount of catalyst and acid value in pretreatment step of raw material fats and oils]

A model waste edible oil (acid value 10.02 KOH-mg/g) prepared by mixing 19.0 g of rice oil (manufactured by Tsuno Co., Ltd.) and 1.0 g (3.55 mmol) of oleic acid (manufactured by NOF Corporation, purity 99.5%), and 10 mL of methanol were introduced into a pear-shaped flask, and sodium hydrogen sulfate monohydrate (manufactured by Sigma-Aldrich Co. /Japan , SAJ special grade) as a catalyst was added thereto in an amount that is indicated in Table 1. A circulating cooler is provided to the flask, and while the system was stirred with a magnet stirrer, a pretreatment was carried out for 3 hours at a reflux temperature (about 70°C). The acid values obtained after the respective treatments are presented in Table 1.

**[Table 1]**

| Run No. | NaHSO₄·H₂O g(mmol) | NaHSO₄/free fatty acids (molar ratio) | Acid value after treatment (KOH-mg/g) |
|---|---|---|---|
| 1 | 0.2(1.44) | 0.41 | 0.52 |
| 2 | 0.5(3.62) | 1.02 | 0.45 |
| 3 | 1.0(7.24) | 2.04 | 0.17 |
| 4 | 1.5(10.86) | 3.06 | 0.26 |
| 5 | 2.0(14.48) | 4.08 | 0.27 |
| 6 | 3.0(21.73) | 6.12 | 0.47 |
| 7 | 4.0(28.96) | 8.16 | 0.52 |

From the results shown in Table 1, it can be seen that when the amount of catalysts is excessive, the acid value tends to increase. It can be seen that an amount of use of the catalyst of about 0.3 to 5 times the molar amount of the free fatty acids, is sufficient.

### Example 2

### [As to treatment time and acid value in pretreatment step for raw material fats and oils]

The amount of catalysts was fixed to 1 g (7.24 millimoles) for the model waste edible oil used in Example 1, and in order to investigate the relations between the acid value of the raw material oil and the treatment time; the reaction conditions were set as indicated in Table 2. The results are presented in Table 2.

**[Table 2]**

| Run No. | Reaction time (hours) | Acid value (KOH-mg/g) | Run No. | Reaction time (hours) | Acid value (KOH-mg/g) |
|---|---|---|---|---|---|
| 1 | 0.1 | 5.20 | 6 | 3.0 | 0.26 |
| 2 | 0.2 | 1.75 | 7 | 4.0 | 0.32 |
| 3 | 0.5 | 0.51 | 8 | 5.0 | 0.45 |
| 4 | 1.0 | 0.40 | 9 | 6.0 | 0.61 |
| 5 | 2.0 | 0.32 | 10 | 12.0 | 0.80 |

As shown in Table 2, a treatment for about 15 minutes can sufficiently lower the acid value. Meanwhile, a treatment for a long time such as longer than 5 hours does not give any further effect, and the acid value rather tends to increase.

### Example 3

### [Example of applying Jatropha oil as raw material fats and oils]

A pretreatment was carried out under the same conditions as those used in Example 1, except that 40 g of Jatropha oil (manufactured by Horai Co. , Ltd.) having an acid value of 8.92 KOH-mg/g was used instead of the model waste edible oil used in Example 1, and 4.0 g of NaHSO₄·H₂O as a catalyst and 20 mL of methanol were used. As a result, after 30 minutes, the acid value was 3.06 KOH-mg/g; after one hour, the acid value was 1.16 KOH-mg/g; and after 3 hours, the acid value was 1.25 KOH-mg/g.

### Example 4

### [Example of obtaining higher fatty acid alkyl esters by main reaction]

To a model waste edible oil prepared by adding oleic acid to rice oil at a ratio of 19:1 (acid value 10.02 KOH-mg/g), 2.0 g of NaHSO₄·H₂O as a catalyst was used, and 10 mL of methanol was added. A pretreatment was carried out for 15 minutes at the reflux temperature, and the pretreated mixture was filtered. Methanol was distilled off under reduced pressure, and the catalyst residue was removed. The acid value after the pretreatment was 1.75 KOH-mg/g.

To this raw material oil, 20 mL of methanol was added, and 0.14 g (2.5 mmol) of a CaO catalyst was used. The mixture was allowed to react for 2 hours at the reflux temperature.

After left to cool, the reaction liquid was treated by distilling off excess methanol under reduced pressure in a rotary evaporator, and the reaction liquid was left to stand so as to cool to room temperature. Subsequently, 30 µL of higher fatty acid methyl esters in the upper layer were sampled and dissolved in 4 mL of hexane contained in a separatory funnel. This was washed with 5 mL of water, and the hexane solution in the upper layer thereof was separated and dehydrated with anhydrous sodium sulfate. Subsequently, a thin-layer chromatograph (trade name: Iatroscan, MK-5 type, manufactured by Mitsubishi Kagaku Iatron, Inc.) was used, and the concentrations of various components (methyl palmitate, methyl linolate, methyl oleate, triglycerides, diglycerides, and monoglycerides) were measured by thin-layer chromatography (TLC-FID). A Chromarod-SIII (silica gel) was used as the column, and hexane/diethyl ether/acetic acid (volume ratio: 97/3/0.5) was used as the developing solvent. The proportion of the sum of methyl palmitate at a retention time of 0.160 to 0.181 minutes, and methyl linolate and methyl oleate at a retention time of 0.230 to 0.272 minutes, with respect to the total amount of the various components, was designated as the yield of the higher fatty acid methyl esters. As a result, a reaction yield of 97.5% was obtained.

### Example 5

The same procedure as in Example 4 was carried out. However, 0.13 g (3.3 mmol) of NaOH was used as a catalyst. The reaction yield of the higher fatty acid methyl esters in this case was 98.2%.

### Example 6

### [Example of application to fats and oils having a very large acid value]

20 g of bran fatty acids (manufactured by Tsuno Co., Ltd.; the composition included 20.7% of palmitic acid, 2.16% of stearic acid, 41.11% of oleic acid, 32.94% of linolic acid, 1.65% of linolenic acid, and 1.41% of others; acid value 201.7 KOH-mg/g) and 175 mL (4.32 mol) of methanol were introduced into a pear-shaped flask, and 2.0 g (14.5 mmol) of sodium hydrogen sulfate monohydrate (manufactured by Kishida Chemical Co., Ltd.) as a catalyst was added thereto. A circulating cooler was provided, and while the mixture was stirred with a magnetic stirrer, a pretreatment (methylesterification reaction) was carried out for 3 hours at 60°C. The reaction liquid obtained after distilling off excess methanol under reduced pressure was left to stand and cool for a whole day, and then the catalyst was removed by filtration under reduced pressure. The resulting reaction liquid had an acid value of 1.6 KOH-mg/g, the content of the higher fatty acid methyl esters was 99.1%, and the water content was 729.2 ppm.

Furthermore, to the entire amount of this reaction liquid, 0.882 g (6.4 mmol) of sodium hydrogen sulfate monohydrate and 78 mL (1.93 mol) of methanol were added again, and a reaction (60°C, 3 hours) and a post-treatment were carried out in the same manner as in the first step. Thus, a product having an acid value of 0.8 KOH-mg/g, a content of the higher fatty acid methyl esters of 99.4%, and a water content of 375.0 ppm, was obtained. To the entire amount of this reaction product, 3.37 g of Ecolayer 1 (manufactured by Tokuyama Siltech Co., Ltd.) was added and dispersed, and the mixture was centrifuged at 12,500 rpm for one minute with a centrifuge (trade name: KUBOTA 1130 model, manufactured by Kubota Manufacturing Corporation). The acid value of the oil in the upper layer was 0.3 KOH-mg/g, and thus, a biodiesel fuel having a very high purity, which satisfies the EU standards in terms of the acid value and the moisture content, was obtained even without a water-washing step.

### Example 7

### [Example of applying Jatropha oil as raw material fats and oils]

A pretreatment was carried out under the same conditions as in Example 1, except that 20 g of Jatropha oil (manufactured by Horai Co. , Ltd.) having an acid value of 8.92 KOH-mg/g was used instead of the model waste edible oil used in Example 1, and 2.0 g of NaHSO₄·H₂O as a catalyst and 10 mL of methanol were used. As a result, after one hour, the acid value was 0.57 KOH-mg/g.

### Example 8

### [Example of applying actual waste edible oil as raw material fats and oils]

A pretreatment was carried out under the same conditions as in Example 1, except that 20 g of waste edible oil A (Yamaguchi University Coop) having an acid value of 2.05 KOH-mg/g was used instead of the model waste edible oil used in Example 1, and 2.0 g of NaHSO₄-H₂O as a catalyst and 10 mL of methanol were used. As a result, after one hour, the acid value was 0.37 KOH-mg/g.

### INDUSTRIAL APPLICABILITY

The present invention can be effectively used in the case of obtaining a fuel capable of substituting diesel by using fats and oils, particularly waste edible oil or fats and oils that are unsuitable for the use as food.

### EXPLANATIONS OF LETTERS OR NUMERALS

(I): PRETREATMENT STEP
(II): CATALYST RESIDUE SEPARATION STEP
(III): MAIN REACTION STEP
(IV): HIGHER FATTY ACID ALKYL ESTER COLLECTION STEP

## Claims

1. Raw material fats and oils for the production of higher fatty acid alkyl esters,
wherein the raw material fats and oils being fats and oils that are subjected to a transesterification reaction with a monovalent lower aliphatic alcohol in the presence of a basic catalyst when higher fatty acid alkyl esters are produced, and having been pretreated with a monovalent aliphatic alcohol using an alkali metal hydrogen sulfate as a catalyst.

2. The raw material fats and oils for the production of higher fatty acid alkyl esters according to claim 1, wherein waste edible oil or non-edible fats and oils are subjected to the pretreatment.

3. The raw material fats and oils for the production of higher fatty acid alkyl esters according to claim 1 or 2, wherein the pretreated raw material fats and oils for the production of higher fatty acid alkyl esters have an acid value of 2.5 KOH-mg/g or less.

4. The raw material fats and oils for the production of higher fatty acid alkyl esters according to any one of claims 1 to 3, wherein the alkali metal hydrogen sulfate is sodium hydrogen sulfate, and the basic catalyst is sodium hydroxide or calcium oxide.

5. A process for producing higher fatty acid alkyl esters, the process comprising subjecting the raw material fats and oils for the production of higher fatty acid alkyl esters according to any one of claims 1 to 4, and a monovalent lower aliphatic alcohol to a transesterification reaction in the presence of a basic catalyst, and thereby producing higher fatty acid alkyl esters.

6. A process for producing higher fatty acid alkyl esters, the process comprising:
supplying raw material fats and oils, a monovalent aliphatic alcohol, and an alkali metal hydrogen sulfate as a catalyst to a pretreatment tank, and carrying out a pretreatment;
separating a catalyst residue from a treated liquid discharged from the pretreatment tank;
supplying the treated liquid, from which the catalyst residue has been separated, to a main reaction tank, adding a monovalent lower aliphatic alcohol and a basic catalyst to the main reaction tank, and thereby carrying out a transesterification reaction; and
separating and collecting higher fatty acid alkyl esters from the reaction liquid discharged from the main reaction tank.

7. A process for producing higher fatty acid alkyl esters, the process comprising allowing a monovalent aliphatic alcohol and free form fatty acids to react by using an alkali metal hydrogen sulfate as a catalyst.
